# EUROPEAN PATENT APPLICATION

(11) **EP 0 853 413 A2**
(43) Date of publication of application: **15.07.1998**
(21) Application number: 98400018.2
(22) Date of filing: 07.01.1998
(51) Int. Cl.: H04L 29/06

(54) **Special purpose network server**

(30) Priority: 09.01.1997 US 781024
(71) Applicant: Sun Microsystems Inc., Palo Alto, California 94303 (US)
(72) Inventor: Lindholm, Timothy G., Palo Alto, California 94301 (US)
(74) Representative: Chameroy, Claude

(57) **Abstract**

A low cost, portable network server appliance has a permanent and temporary storage device, a network interface, and a dedicated, special-purpose server processor configured to execute the server applications. A high speed port may also be used for administrative and maintenance functions.

## Description

### Background Art

The present invention relates generally to the field of client-server networks, and more particularly to the field of special purpose servers on such networks, including the Internet.

In networks, clients are typically processors that users access for various purposes. Servers are processors that provide services to the clients upon request. Networks such as the Internet operate according to two principal models. The traditional model, known as the "fat client" model, envisions fully configured clients. Those clients, which are usually personal computers or workstations, have general purpose operating systems and the application programs needed to perform functions desired by its users, regardless of whether the programs relate to any networked functions. The model envisions using the Internet, or any other network, primarily for storing and retrieving data and for communications.

More recently, Sun Microsystems has proposed and implemented a "slim client" model. The client in such a system has minimal software and hardware. The software would include just a basic operating system, and clients would download applications, known as "applets," from other servers on the network. In this system, the servers would be fully configured to allow the storage and generation of the applets. The network itself stores and retrieves programs and data, acting much like a disk drive in conventional computer systems.

In both the traditional and "slim client" models of the Internet, the servers are fully configured computer systems, especially from a hardware standpoint. For example, the servers include monitors and keyboards for user interface, and typically contain a great deal of permanent storage, such as magnetic or optical devices. The servers also have a full software capability. This can lead to security problems, hence the need for firewall machines. In addition, because application development may occur on such servers, they typically have additional random access memory as well as peripherals, such as printers and auxiliary storage devices and communications devices.

Sometimes, however, there is no need for fully configured servers. For example, when no software development or maintenance takes place on the servers, much of the software and hardware becomes unnecessary. As another example, some concerns use a caching server just to cache material fetched from the Internet to provide greater speed for later accesses. Such caching servers do not need all the capabilities of fully configured servers.

If a server does not need to maintain full capabilities at all times, having full capability provides no advantages and may instead create disadvantages. For example, fully configured servers cost a great deal of money, so some concerns cannot afford to purchase and maintain their own server. Those concerns must rent time and space on someone else's server.

Conventional servers may also be difficult to move. Portability is important for individuals and small concerns that may need to travel or move frequently.

Finally, the large amount of hardware and software creates other costs, such as the risk of component or software failure and possible security breaches. To provide needed security, many concerns dedicate a "proxy server" as their public face so Internet users see only the proxy server and do not know about the full server hiding behind the proxy server.

Merely removing the software and hardware from a conventional server leaves a full-capability machine that wastes much of its capabilities. There is instead a need for a network server with only the hardware and software needed to function as a network server. Such a server should also be portable and low cost.

### Disclosure of the Invention

The network appliance server consistent with this invention includes only the hardware and software necessary to function as a server. As such, it can be low cost and portable.

In accordance with the purpose of the invention, as embodied and broadly described herein, a network server appliance comprises a permanent storage device containing server applications; a temporary storage device for providing temporary storage; a dedicated, special-purpose server processor, coupled to the permanent and temporary storage devices, configured to execute the server applications in response to client requests; and a network interface, coupled to the dedicated server processor, configured to provide an interface to an external network and to receive the client requests.

Both the foregoing general description and the following detailed description should be considered exemplary and explanatory only. They do not restrict the claimed invention, except as provided by law. The accompanying drawings, which are incorporated in and constitute a part of this specification, illustrate embodiments consistent with this invention and, together with the description, further explain the principles of the invention.

### Brief Description of the Drawings

In the drawings:
Fig. 1 is a block diagram of a network using an embodiment of a server consistent with the present invention;
Fig. 2 is a block diagram of a server consistent with the present invention;
Fig. 3 is a block diagram of another server consistent with the present invention;
Fig. 4 is a perspective view of a housing for the servers in Figures 2 or 3;
Fig. 5 is a block diagram of yet another server consistent with the present invention; and
Fig. 6 is a diagram of a scalable server consistent with the present invention.

### Best Mode for Carrying Out the Invention

Reference will now be made in detail to embodiments consistent with the present invention, examples of which are illustrated in the accompanying drawings. The same reference numbers in different drawings refer to the same or like parts.

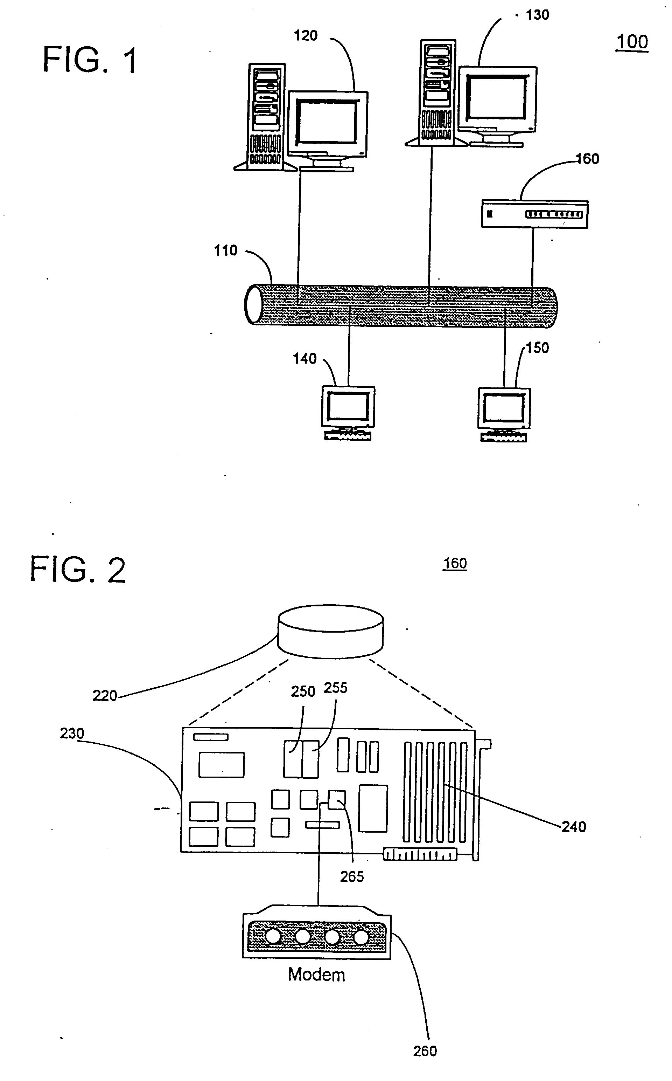

Fig. 1 shows a network 100 containing a transmission medium 110, such as the Internet, conventional servers 120 and 130, clients 140 and 150, and a network server appliance 160. Network server appliance 160 can co-reside with a disk drive or, as explained in greater detail below, appliance 160 may take other forms.

Although network server appliance 160 does not have the full complement of hardware and software that the other network servers 120 and 130 do, network server appliance 160 provides full-service functions for the network. Those functions include, for example, the ability to service HTML pages and Java™ applets. Java™, microJava™, JavaOS™, JavaSoft™, Jeeves™, Sun™, and Sun Microsystems™ are trademarks or registered trademarks of Sun Microsystems in the United States and other countries.

Fig. 2 shows an embodiment of server appliance 160. Appliance 160 includes a permanent storage device containing, among other things, server applications. In Fig. 2, a disk drive 220 serves as such a permanent storage device. Disk drive 220 has sufficient capability to cache applications running on appliance 160 or to provide necessary backup.

Drive 220 contains a driver board 230 with electronics to control the disk drive, as well as additional electronics to provide other functions. The additional electronics shown in Fig. 2 includes a random access memory (RAM) 240 with sufficient temporary storage capacity to allow server appliance 160 to operate as a network server. RAM 240, however, does not need any additional storage capability for general purpose applications.

Driver board 230 also contains a microprocessor 250 configured to run a subset of the Java™ platform. Microprocessor 250 is a dedicated, special-purpose server processor without the full server capabilities needed for software development or maintenance. Microprocessor 250 instead includes only what it needs to execute server applications in response to client requests. As such, microprocessor 250 can be either a microJava™ chip that directly executes the Java™ virtual machine or a standard microprocessor.

Microprocessor 250 could also have a read only memory (ROM) 255 containing only what is necessary to allow server appliance 160 to operate as a basic server. For example, ROM 255 could include a JavaOS™ operating system to support the Java™ run time system, the necessary Java libraries, and a web server either written in the Java™ language, such as the JavaSoft™ Jeeves™ server, or extensible in that language. All additional functions can be downloaded and stored in a flash ROM or in disk drive 220.

Microprocessor 250 with ROM 255 would thus contain programs, such as bootstrap and other loaders, to initialize appliance 160, to receive and store new applications, and to execute server applications, such as those written in the Java™ language. Server appliance 160, however, need not be written in the Java™ language or even be Java-aware.

The thin server appliance model relieves manufacturers of the need to prebundle support for all possible server functionality. Instead, simpler servers according to this invention are specializing at runtime to a user's actual needs by, for example, uploading "servelets," which are the server extension equivalents to "applets."

Server appliance 160 also has an interface to the network that could receive client requests and communicate with other servers. In Fig. 2, a modem 260 provides such an interface. Although shown as an external device, modem 260 would more likely be internal and the user would only see the telephone jack and front-panel lights.

Modem 260 is preferably coupled to driver board 230 and the other associated electronics via a modem interface integrated circuit 265. Integrated circuit 265 can provide the appropriate interface such as an ISDN interface, and will allow the network server appliance 160 to monitor traffic on the Intemet to obtain the requests destined for server appliance 160.

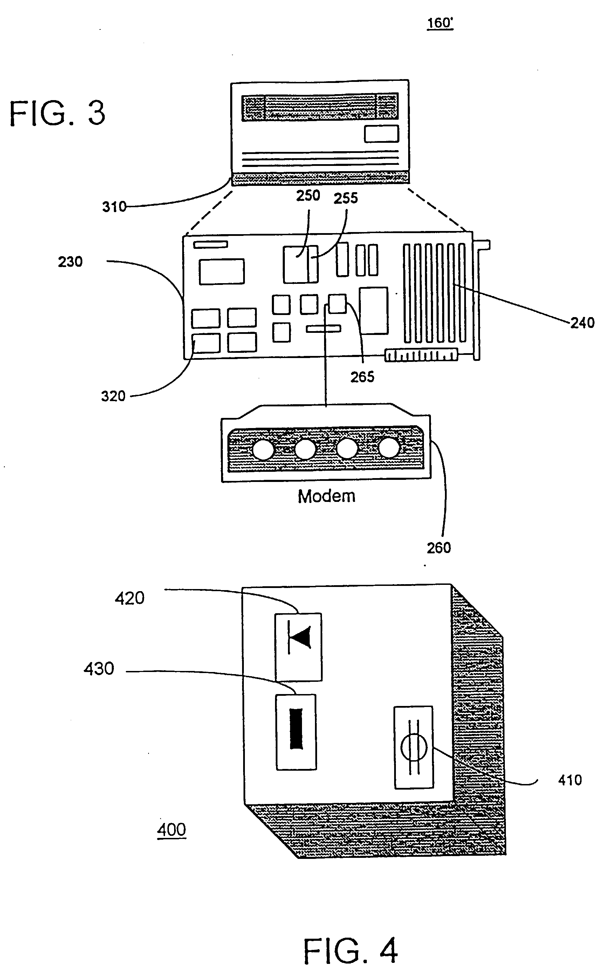

Fig. 3 shows an alternative embodiment for network service appliance 160'. In Fig. 3, the permanent storage device is an optical disk drive 310 that typically also includes temporary storage. Alternatively, disk drive 310 can contain an auxiliary magnetic disk or flash ROM for such temporary storage.

Appliance 160' in Fig. 3 also includes an auxiliary port 320 to provide faster downloading of server applications or extensions, i.e., applets or servelets, from other servers or from clients. Port 320 can be an SCSI port, an Ethemet port, a serial port, or some other port that provides the appropriate high speed interface. Either port 320 or a modem port could be used for administration and maintenance purposes as well. Port 320 offers several advantages over a modem, however, such as a direct desktop to server connection and the avoidance of another line to the network for maintenance.

Fig. 4 shows a housing for the network server appliance 160. As Figs. 2 and 3 show, all the electronics except for the modem and the disk are on a single PC board in the disk driver.

In addition, all of the components are contained within an integrated housing 400. Housing 400 includes a power receptacle 410 to supply power to appliance 160, and an ON/OFF switch 420 to energize and deenergize appliance 160. A telephone jack 430 would provide the network interface and, as explained above, there may be a separate port 320 for high-speed communications for functions such as administration and maintenance.

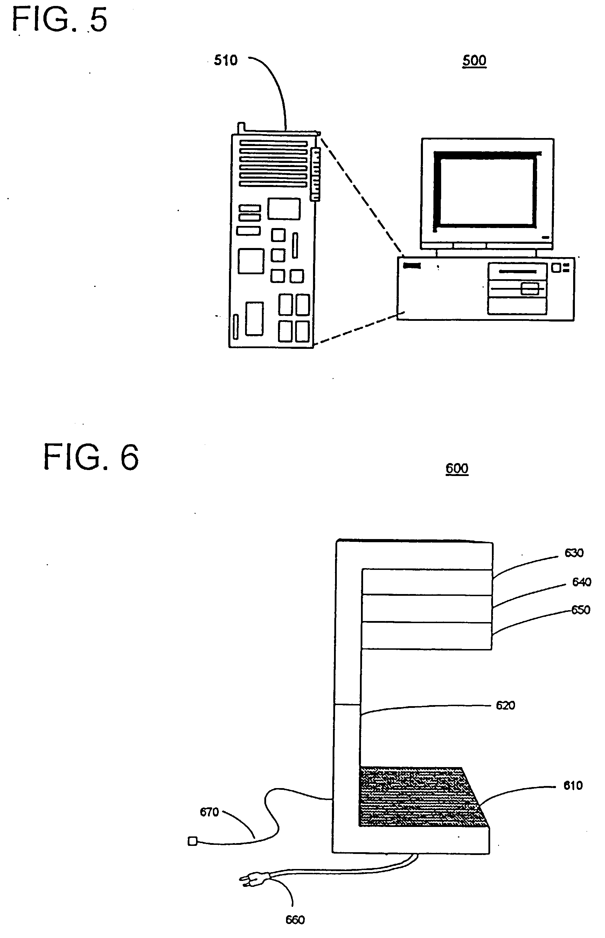

Fig. 5 shows yet another embodiment of the network server appliance on board 510. As Fig. 5 shows, a conventional desktop computer 500 can function as the network server appliance, and the microprocessor on board 510 would be configured as the same dedicated, special server processor shown in the other embodiments. The server appliance on board 510 functions as a "parasitic" coprocessor. If intended as a proxy server, the appliance should not share the CPU or the bus of the computer 500. It is actually a separate device using the same power and housing as the rest of the computer.

Fig. 6 shows a diagram of a scalable server 600 according to this invention that can be expanded after purchase. Server 600 has a processor board 610 in its base. Processor board 610 is configured as microprocessor 250 and is connected to a backbone 620, which has several slots for other modules. Modules that can be plugged into backbone 620 include hard disk 630, optical drive 640, and CD-ROM player 650. Electrical plug 660 and phone jack 670 provide power and signal interfaces, and, as explained above, there can also be a high-speed port to processor board 610.

Scalable server 600 takes advantage of available hard disk packaging, although the backbone of such systems is an SCSI bus. Server 600 instead uses this basic configuration as a bus, server, and communications support. Processor board 610 can have its server control software upgraded, such as by a servelet, each time a new module is added.

The network server appliance can be constructed for very little money. In that sense, this server appliance can approach commodity status and prove useful in peer-to-peer network communications.

Moreover, the server appliance of this invention can be portable, making the appliance easy to move to different locations. This feature assists in maintaining, managing, and updating the server.

It will be apparent to persons skilled in the art that various modifications and variations can be made in the server of the present invention without departing from the scope or spirit of the invention. For example, the microprocessor could be constructed of several circuit elements, be a state machine, or use components on a driver board. Different storage devices could be used as well.

Additional embodiments of the invention will be apparent to persons skilled in the art from consideration of the specification and practice of the invention disclosed herein. The specification is only exemplary, with a true scope and spirit of the invention being indicated by the following claims together with their full range of equivalents.

## Claims

1. A network server appliance comprising:
a permanent storage device containing server applications;
a temporary storage device providing temporary storage;
a dedicated, special-purpose server processor, coupled to the permanent and temporary storage devices, configured to execute the server applications in response to client requests; and
a network interface, coupled to the dedicated server processor, configured to provide an interface to an external network and to receive the client requests.

2. The appliance of claim 1, wherein the permanent storage mechanism includes a magnetic disk drive with a driver board, and
wherein the processor includes
a microprocessor mounted on the driver board.

3. The appliance of claim 1, wherein the permanent storage mechanism includes an optical disk drive with a driver board, and
wherein the processor includes
a microprocessor mounted on the driver board.

4. The appliance of claim 1, wherein the permanent storage mechanism includes a CD-ROM with a driver board, and
wherein the processor includes
a microprocessor mounted on the driver board.

5. The appliance of claim 1, wherein the processor includes
a mechanism configured to initialize the appliance, and
a mechanism configured to monitor the network interface for client requests.

6. The appliance of claim 1, wherein the processor includes
a mechanism configured to execute network server applications.

7. The appliance of claim 1, wherein the processor includes
a mechanism configured to receive and store new applications on the permanent storage device.

8. The appliance of claim 1, further including a high speed port coupled to the processor.

9. The appliance of claim 1, further including an integrated housing containing the appliance.

10. A scalable network server appliance comprising:
a backplane capable of accommodating several modules;
a permanent storage module, connected to the backplane, containing server applications;
a temporary storage device providing temporary storage;
a dedicated, special-purpose server processor module, connected to the backplane and coupled to the permanent storage module and to the temporary storage device, configured to execute the server applications in response to client requests; and
a network interface, coupled to the dedicated server processor module, configured to provide an interface to an external network and to receive the client requests.

11. The appliance of claim 10, wherein the permanent storage module includes a magnetic disk drive.

12. The appliance of claim 10, wherein the permanent storage module includes an optical disk drive.

13. The appliance of claim 10, wherein the permanent storage module includes a CD-ROM.

14. The appliance of claim 10, further including a base, and
wherein the processor module is located inside the base.
